# EUROPÄISCHE PATENTSCHRIFT

(11) **EP 3 881 426 B1**
(45) Veröffentlichungstag und Bekanntmachung des Hinweises auf die Patenterteilung: **22.11.2023**
(21) Anmeldenummer: 20725679.3
(22) Anmeldetag: 07.05.2020
(51) Int. Cl.: H02P 1/46, H02P 6/22, H02P 6/15, H02P 6/18, H02P 6/26

(54) **SENSORLOSES KOMMUTIERUNGSVERFAHREN**
SENSORLESS COMMUTATION METHOD
PROCÉDÉ DE COMMUTATION SANS CAPTEUR

(30) Priorität: 27.05.2019 DE 102019114073
(43) Veröffentlichungstag der Anmeldung: 22.09.2021
(73) Patentinhaber: ebm-papst Mulfingen GmbH & Co. KG, 74673 Mulfingen (DE)
(72) Erfinder: KILIAN, Thomas, 74238 Krautheim (DE); SCHNEIDER, Fabian, 74585 Rot am See (DE)
(74) Vertreter: Staeger & Sperling Partnerschaftsgesellschaft mbB
(86) Internationale Anmeldenummer: PCT/EP2020/062759
(87) Internationale Veröffentlichungsnummer: WO 2020/239385

(56) Entgegenhaltungen:
- EP-A1- 3 425 788
- DE-A1-102011 105 913
- US-A1- 2017 222 580

## Beschreibung

Die Erfindung betrifft ein sensorloses Kommutierungsverfahren eines einsträngigen EC-Motors sowie einen einsträngigen EC-Motor.

Einphasige elektronisch kommutierte Motoren (ECM) sind vergleichsweise preiswert und werden daher häufig für bestimmte Antriebsaufgaben verwendet, z. B. für Ventilatoren, Lüfter oder Kreiselpumpen. Sie werden gewöhnlich mittels eines Hallsensors gesteuert.

Die EP 2 086 104 A2 zeigt einen elektronisch kommutierten Motor mit einer H-Brücke und einem Rotorstellungssensor, der ein Ausgangssignal erzeugt. In Abhängigkeit vom Ausgangssignal werden zu einem Zeitpunkt t2' die unteren Schalter der H-Brücke leitend geschaltet, und durch das hierdurch resultierende Stromkreisen wird die elektrische Energie in mechanische Energie umgewandelt, so dass zu einem Zeitpunkt t3' bzw.t1 eine Kommutierung in Abhängigkeit vom Ausgangssignal erfolgen kann, bei der keiner oder nur ein geringer Strom durch die Wicklung fließt. Der Zeitpunkt t2' wird optimiert, indem der Strom durch die Wicklung nach der Kommutierung gemessen und ausgewertet wird.

Zunehmend wird in den letzten Jahren jedoch eine Kommutierung ohne Sensor angestrebt. Grundsätzlich sind aus dem Stand der Technik die folgenden Prinzipien zur sensorlosen Kommutierung eines einsträngigen EC-Motors bekannt:
- Lagegeberlose Kommutierung eines einsträngigen EC-Motors durch modellbasierte Berechnung der Polradspannung des Motors.
- Lagegeberlose Kommutierung eines einsträngigen EC-Motors durch Auswertung des zeitlichen Verlaufes des Wicklungsstroms bei Vorgabe einer konstanten Spannungsamplitude.
- Lagegeberlose Kommutierung eines einsträngigen EC-Motors durch direkte Auswertung der Polradspannung des Motors während einer stromlosen Phase (Stromlücke).

Zur genauen Definition eines EC-Motors gibt man zum einen die Zahl der Statorstromimpulse pro Rotordrehung von 360° el. an, z. B. einpulsig, zweipulsig, dreipulsig, etc., und zum anderen gibt man die Zahl der Wicklungsstränge im Stator an, z. B. einsträngig, zweisträngig, dreisträngig etc.

Man spricht also z. B. von einem einsträngigen, zweipulsigen ECM, oder von einem zweisträngigen, zweipulsigen ECM. Da in der physikalischen Wirkungsweise zwischen diesen beiden Motortypen kein grundsätzlicher Unterschied besteht, und da die Praxis stets nach Vereinfachung der Terminologie strebt, bezeichnet man solche Motoren generell als einphasige EC-Motoren, da sie je Stromimpuls jeweils nur einen Strang besitzen.

Aus der EP 2 60 397 A1 ist eine Lösung bekannt bei der zuerst die Lage des Stromrückens und die Stromamplitude am Maximum des Stromrückens ermittelt wird. Anschließend wird im Bereich des Stromsattels das dortige Minimum des Stromes erfasst, ggf. auch dessen Amplitude. Wenn das Minimum durchlaufen und ein Wert für die Höhe des Stromes ermittelt worden ist, der einen Kommutierungsvorgang auslösen soll, wird dieser dann ausgelöst, wenn der Motorstrom diesen berechneten Wert erreicht oder überschritten hat. Dabei lässt sich dieser den Kommutierungsvorgang auslösende Stromwert je nach den Bedürfnissen mathematisch manipulieren, z.B. in der Form, dass beim Start die Kommutierung spät erfolgt und mit zunehmender Drehzahl immer mehr in Richtung früh verschoben wird.

Die Kommutierung ohne Rotorstellungssensor hat den Vorteil, dass die Elektronik des Motors auch im Abstand vom Motor angeordnet werden kann, so dass Bauteile der Elektronik auch für andere Aufgaben verwendet werden können. Z. B. kann ein im Motor verwendeter Mikroprozessor auch für Regelaufgaben verwendet werden, z. B. für eine Temperaturregelung. Bei Bedarf kann so der Motor kleiner gebaut werden.

Da bei solchen Motoren der Rotor Drehstellungen hat, an denen der Motor kein elektromagnetisches Drehmoment erzeugen kann, verwendet man ein Hilfsmoment, das an diesen Nullstellen wirksam ist. Das kann ein magnetisch erzeugtes Hilfsmoment sein, das man als Reluktanzmoment bezeichnet. Alternativ könnte dieses Hilfsmoment mechanisch erzeugt werden, z. B. durch eine Feder, die in bestimmten Drehstellungen gespannt wird und an den Nullstellen ihre gespeicherte Energie abgibt. Die Funktion dieses Hilfsmoments ist es vor allem, den Rotor so zu drehen, dass er sich beim Start nicht in einer Drehstellung befindet, in der der Motor kein elektromagnetisches Drehmoment erzeugen verwendet.

Solche Motoren haben eine bevorzugte Drehrichtung. Eine zusätzliche Erschwernis ergibt sich bei Lüftern oder Pumpen dadurch, dass diese durch das transportierte Medium sozusagen "fremd angetrieben" werden können, z. B. durch Luftströme, wobei nicht bekannt ist, ob sich der Rotor durch diesen Fremdantrieb in der Vorzugsrichtung oder entgegen der Vorzugsrichtung dreht.

Bei starken Strömungen kann die Drehzahl des Rotors sogar ziemlich hoch werden, und bei einem Motor ohne Hallsensor muss man in diesem Fall zuerst die Drehrichtung ermitteln, und wenn diese falsch ist, muss man den Motor reversieren.

Aus der EP 1 596 495 A2 ist es z. B. bekannt, bei einem solchen EC-Motor mit Reluktanz-Hilfsmoment die Drehrichtung aus der Form der induzierten Spannung zu ermitteln, also aus der Spannung, welche der permanentmagnetische Rotor bei seiner Drehung in einem stromlosen Wicklungsstrang induziert.

Weiterer druckschriftlicher Stand der Technik, im vorliegenden technischen Gebiet, welcher den Oberbegriff des Anspruchs 1 widerspiegelt, ist in den Dokumenten US 2017/222 580 A1, EP 3 425 788 A1 und DE 10 2011 105 913 A1 offenbart.

Der Erfindung liegt daher die Aufgabe zugrunde, vorbesagte Nachteile zu überwinden und ein optimiertes und verbessertes sensorloses Kommutierungsverfahren für einen einsträngigen EC-Motor vorzuschlagen, bei dem auch eine Drehrichtungserkennung möglich ist. Ferner ist es wünschenswert dabei auch den Anlauf des EC-Motors in eine beliebige Drehrichtung (d. h. in und entgegen der Vorzugsdrehrichtung) zu ermöglichen. Eine weitere Aufgabe besteht darin, dass bei einem Fremdantrieb, dieser erkannt wird und der EC-Motor abgebremst werden kann.

Die Aufgabe wird erfindungsgemäß durch die Merkmale der Ansprüche 1 und 2 ge-löst.

Ein Grundgedanke der Erfindung besteht darin, dass die lagegeberlose Kommutierung eines einsträngigen EC-Motors unter direkter Verwendung einer Stromregelung erfolgt. Diese Stromregelung (z. B. eine Zweipunktregelung) regelt den Wicklungsstrom des einsträngigen Motors während den beiden Kommutierungsphasen (positiver Stromfluss, negativer Stromfluss) abschnittsweise auf einen konstanten Betrag. Der Betrag der mittleren Ausgangsspannung dieses (Zweipunkt-)Stromreglers, welche zwischen den beiden Wicklungsanschlüssen des Motors anliegt, wird dabei zur Ermittlung des Kommutierungszeitpunktes, d. h. dem Wechsel zwischen den beiden Kommutierungsphasen genutzt. Dies erfolgt durch einfachen Vergleich mit einem Grenzwert. Wenn dieser Grenzwert unterschritten wird, erfolgt der Wechsel der Kommutierungsphase. Der Grenzwert wird dabei erfindungsgemäß proportional zur Amplitude des Konstantstroms (ohmscher Spannungsabfall) gewählt. Der Kommutierungszeitpunkt entspricht in diesem Fall dem Zeitpunkt des Nulldurchgangs der Polradspannung des Motors. Somit sind Wicklungsstrom und Polradspannung in Phase und es wird ein optimiertes Drehmoment erzeugt. Dies entspricht dem Kommutierungszeitpunkt bestehender Verfahren z. B. mit direkter Erfassung der Polradspannung, jedoch mit dem Vorteil dass beim beschriebenen Verfahren keine Stromlücke eingefügt werden muss. Durch abweichende Grenzwerte kann der Kommutierungszeitpunkt variiert werden und somit z. B. eine vorteilhafte Vorkommutierung erreicht werden. Diese kompensiert dann die durch die Wicklungsinduktivität verursachte verzögerte Umkehrung des Stromflusses in der Motorwicklung am Kommutierungszeitpunkt.

In einer vorteilhaften Ausführung kann die Umkehrung des Stromflusses nach erkanntem Kommutierungszeitpunkt nicht maximal schnell, sondern mit einer definierten Änderungsrate erfolgen (z. B. durch die Vorgabe einer Rampenfunktion am Eingang des Stromreglers). Somit kann noch eine Verbesserung hinsichtlich der Geräuschentwicklung insbesondere bei Axialventilatoren erzielt werden.

Ferner ist mit Vorteil vorgesehen, dass der Anlauf des Motors aus dem Stillstand durch ein gezieltes Auslösen des Wechsels zwischen den beiden Kommutierungsphasen erzwungen wird. Dies kann z. B. durch ein festes Zeitintervall gegeben sein, nach dessen Verstreichen ein erzwungener Wechsel der Kommutierungsphase erfolgt. Somit wird der Rotor in Bewegung versetzt und die weitere Kommutierung erfolgt wiederum durch die Rückwirkung der Polradspannung auf die Ausgangsspannung des (Zweipunkt-)Stromreglers.

Gemäß einer vorteilhaften Ausführungsform der vorliegenden Erfindung ist vorgesehen, dass mittels einer Auswertung der mittleren Steigung des Betrages der Ausgangsspannung des (Zweipunkt-)Stromreglers während einer Kommutierungsphase die Drehrichtung des Motors ermittelt wird. Durch eine Asymmetrie in der Geometrie des Motors ist die mittlere Steigung des Betrages der Polradspannung abhängig von der Drehrichtung des Rotors. Dies bildet sich direkt im Verlauf der Ausgangsspannung des (Zweipunkt-)Stromreglers ab. Eine im Mittel positive Steigung des Betrages während einer Kommutierungsphase kann somit als positive Drehrichtung definiert werden, eine im Mittel negative Steigung des Betrages umgekehrt als negative Drehrichtung. Somit kann bei angeforderter positiver Soll-Drehrichtung eine ungewünschte negative Ist-Drehrichtung erkannt und entsprechend reagiert werden, z.B. mit Abbremsen und anschließendem Neuanlaufversuch.

Die mittlere Ausgangsspannung des (Zweipunkt-)Stromreglers ist hierbei prinzipiell gleichbedeutend mit der Definition eines Aussteuergrades. D. h. statt der Erfassung der mittleren Spannung an den Wicklungsanschlüssen kann vorteilhaft der Aussteuergrad/Tastgrad der Ansteuerung genutzt werden (Einschaltdauer bezogen auf die Periodendauer, bzw. Einschaltdauer bezogen auf Einschaltdauer + Ausschaltdauer). Dies kann in einer vorteilhaften Ausführungsform der Erfindung auch der PWM-Aussteuergrad einer Ansteuerung mittels Pulsweitenmodulation (PWM) sein.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine beispielhafte Konstant-Stromregelung mit den Kommutierungsphasen;
- Fig. 2: einen Funktionsgraphen, der den Betrag der mittleren Ausgangsspannung und den Spannungsgrenzwert darstellt;
- Fig. 3: einen Funktionsgraphen, der die Stromvorgabe am Stromregler mit einer definierten Änderungsrate zeigt;
- Fig. 4: den zeitlichen Verlauf der Polradspannung bei einer positiven und einer negativen Drehrichtung eines einsträngigen EC-Motors mit einem asymmetrischen Aufbau der Statorzähne;
- Fig. 5: den zeitlichen Verlauf des Betrages der mittleren Ausgangsspannung bei positiver und bei negativer Drehrichtung des EC-Motors;
- Fig. 6: ein Blockschaltbild des Kommutierungsverfahrens;
- Fig. 7: Ablaufdiagramm: Anlauf in eine bestimmte Drehrichtung;
- Fig. 8: Ablaufdiagramm: Vorbereitung sensorloser Anlauf;
- Fig. 9: Ablaufdiagramm: Aktives Bremsen des EC-Motors.
- Fig. 10: einen Funktionsgraphen, der den Betrag der mittleren Ausgangsspannung und den Spannungsgrenzwert beim aktiven Bremsen;
- Fig. 11: einen Funktionsgraphen, der den Betrag der mittleren Ausgangsspannung beim Ausrichten mit einpendelndem Rotor;
- Fig. 12: einen Funktionsgraphen, der den Betrag der mittleren Ausgangsspannung beim Ausrichten mit bereits passend ausgerichtetem Rotor.

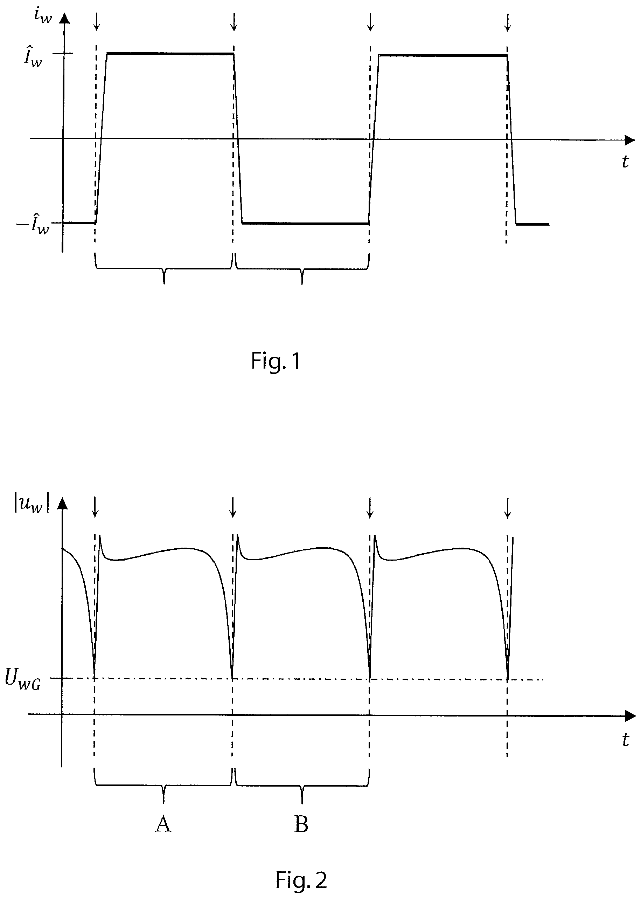

Im Folgenden wird die Erfindung mit Bezug auf die Figuren 1 bis 12 näher erläutert.

Mit der gezeigten beispielhaften Lösung können die Bauteil- und Bestückungs-Kosten eines ansonsten zur Rotorlageerfassung erforderlichen Hall-ICs eingespart werden. Ebenso entstehen durch Wegfall des Hall-ICs Freiheitsgrade in der Anordnung der Leiterplatte im Motorgehäuse. Das beschriebene Verfahren basiert grundlegend auf einer Brücken-Ansteuerung mittels Pulsweitenmodulation (PWM), in Kombination mit einem den Motorstrom durch Verändern des PWM-Aussteuergrads konstant regelnden Stromreglers. Aus der Auswertung des zeitlichen Verlaufs dieses PWM-Aussteuergrads können, neben der Erkennung des Kommutierungszeitpunkts, für weitere Teilaufgaben im Rahmen der sensorlosen Kommutierung der Kommutierungszeitpunkt, d. h. der Zeitpunkt für den Wechsel des Bestromungsmusters im Normalbetrieb, die Drehrichtungserkennung, ein aktives Bremsen und eine Pendelerkennung realisiert werden, bei der das Ausmaß von Pendelbewegungen des Rotors, vornehmlich zum Erkennen des Fortschritts einer, auf eine vorgegebene Ausrichtposition, einpendelnden Rotorbewegung (zum Verkürzen/Minimieren der erforderlichen Ausrichtdauer beim Anlauf) möglich ist.

Ergänzt wird dieses Verfahren durch eine Parkfunktion des Rotors, die den Rotor bei Wegnahme des Drehzahlsollwerts (nach dem Motorlauf) oder beim Anlegen der Versorgungsspannung (vor dem Motorlauf) in die gewünschte Ausrichtposition stellt, um den nachfolgenden Motoranlauf mit minimaler Verzögerung (durch Ausrichten des Rotors) durchführen zu können. Eine Ablaufsteuerung bzw. Selbstlaufsteuerung sorgt für die Abarbeitung der notwendigen Schritte beim Anlauf des Motors (Abbremsen, Ausrichten mit Pendelerkennung, Kick-Start in oder entgegen der Vorzugsdrehrichtung) und stellt sicher, dass der EC-Motor in der gewünschten Drehrichtung dreht. Gegebenenfalls werden eigenständig wiederholt Anlaufversuche durchgeführt.

Die Figur 1 zeigt eine beispielhafte Kommutierung eines einsträngigen EC-Motors mit einer Konstant-Stromregelung mit den beiden aufeinanderfolgenden Kommutierungsphasen A und B. Die lagegeberlose Kommutierung des einsträngigen EC-Motors erfolgt dabei unter Verwendung einer Stromregelung. Diese Stromregelung (z. B. eine Zweipunktregelung) regelt den Wicklungsstrom i_{w}(t) des EC-Motors. In der einen (ersten) Kommutierungsphase A, wird mit positivem Stromfluss und in der zweiten, der Kommutierungsphase A jeweils nachfolgender Kommutierungsphase B, erfolgt eine Bestromung mit negativem Stromfluss. Während der Kommutierungsphasen A, B ist der Stromfluss dabei im Wesentlichen konstant und entspricht jeweils dem Wert î_{w} bzw. - î_{w}. Mit den Pfeilen und der gestrichelten Linie ist jeweils der Kommutierungszeitpunkt dargestellt, zu dem die Kommutierungselektronik bzw. der Stromregler einen Wechsel zwischen den Kommutierungsphasen A, B bewirkt.

Die Figur 2 zeigt einen Funktionsgraphen, der den Betrag der mittleren Ausgangsspannung u_{w}(t) eines Zweipunkt-Stromreglers und den Spannungsgrenzwert u_{WG} darstellt. Der Betrag der mittleren Ausgangsspannung dieses (Zweipunkt-)Stromreglers, wird dabei zur Ermittlung des erforderlichen Kommutierungszeitpunktes, d. h. dem Wechsel zwischen den beiden Kommutierungsphasen A und B genutzt. Dies erfolgt durch einfachen Vergleich mit dem dargestellten Spannungsgrenzwert u_{WG}.

Die Ausgangsspannung u_{w}(t) fällt zunächst ab und sobald diese den Spannungsgrenzwert u_{WG} unterschritten hat, erfolgt der Wechsel der Kommutierungsphase A zur Kommutierungsphase B usw.. Der Spannungsgrenzwert u_{WG} kann dabei proportional zur Amplitude des Konstantstroms aus der Figur 1 (ohmscher Spannungsabfall) gewählt werden. Der Kommutierungszeitpunkt entspricht in diesem Fall dem Zeitpunkt des Nulldurchgangs der Polradspannung.

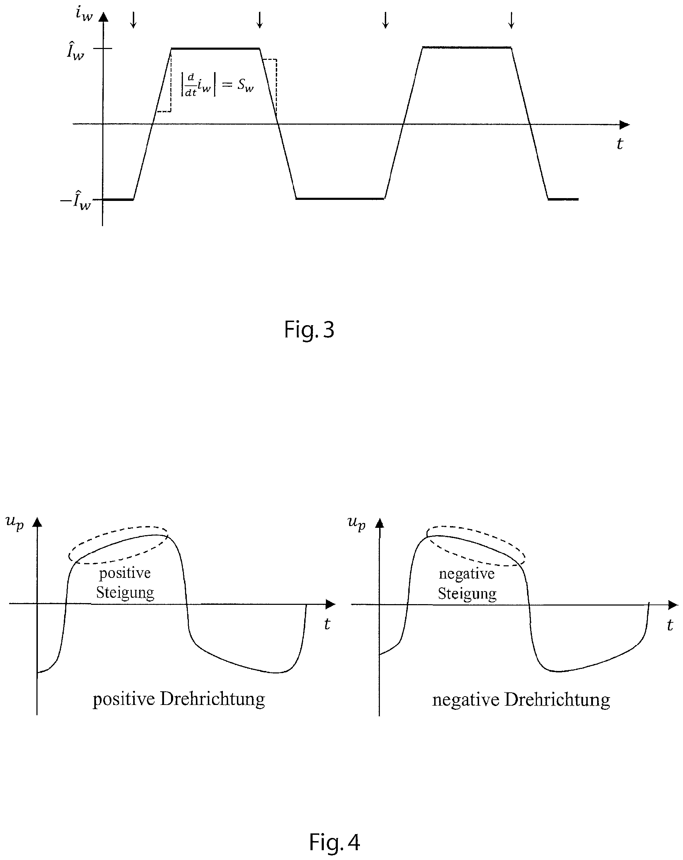

In der Figur 3 ist ein Funktionsgraph zu sehen, der die Stromvorgabe am Stromregler mit einer definierten Änderungsrate im zeitlichen Verlauf zeigt. Durch gezielt andere d. h. abweichende Spannungsgrenzwert u_{WG} kann der Kommutierungszeitpunkt variiert werden und somit z. B. eine vorteilhafte Vorkommutierung erreicht werden. Diese kompensiert dann die durch die Wicklungsinduktivität verursachte verzögerte Umkehrung des Stromflusses in der Motorwicklung am Kommutierungszeitpunkt. Es ist in der Figur 3 zu erkennen, dass die jeweilige Umkehrung des Stromflusses nach erkanntem Kommutierungszeitpunkt nicht sprunghaft oder maximal schnell (wie in der Figur 1 gezeigt) erfolgt, sondern entlang einer Rampenfunktion mit einer definierten Änderungsrate s_{w}, wobei s_{w} die zeitliche Ableitung und damit die mittlere Änderungsrate bezeichnet. Diese ermittelt sich durch das zeitliche Differential des Stroms i_{w}. Technisch wird dies zum Beispiel durch eine Vorgabe einer Rampenfunktion am Eingang des Stromreglers bewerkstelligt.

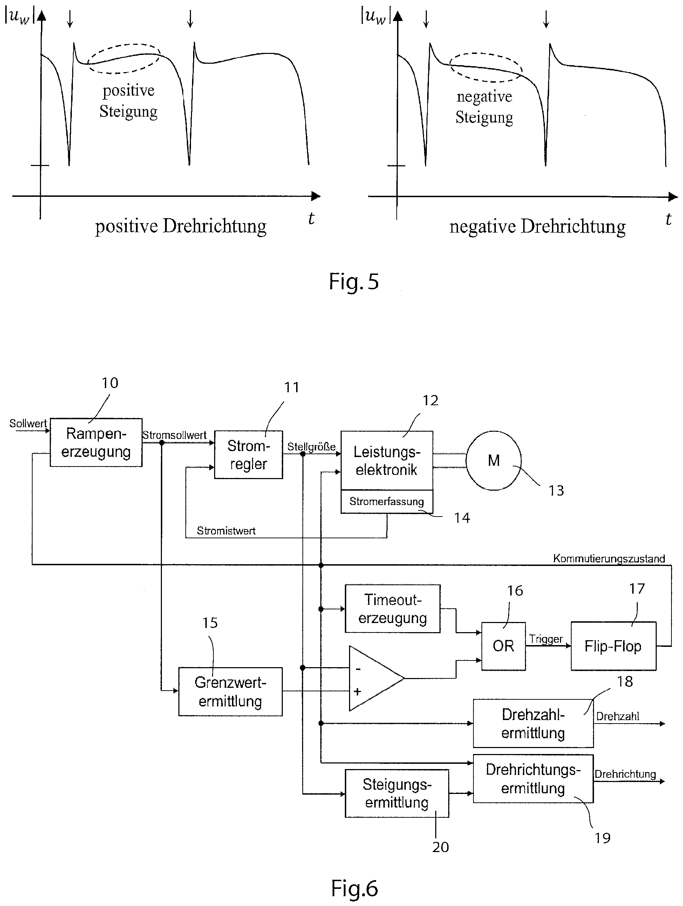

In der Figur 6 ist ein beispielhaftes Blockschaltbild des Kommutierungsverfahrens dargestellt. Die Rampenfunktion erfolgt über eine Rampenerzeugung 10 mittels einer Sollwerteingabe "Sollwert", die als "Stromsollwert" an den Eingang des Stromreglers 11 gegeben wird. Der Stromregler 11 übergibt hierzu eine entsprechend "Stellgöße" an die Leistungselektronik 12, die mit dem EC-Motor 13 verbunden ist. Die Leistungselektronik 12 umfasst ferner eine Stromerfassungseinrichtung 14 um den "Strom-Ist-Wert" zu erfassen. Dieser wird dem Stromregler 11 wieder zugeführt, um ggf. die "Stellgröße" anzupassen.

Der Grenzwert wird über den Grenzwertermittler 15 einer Steuerungslogik zugeführt, wobei über eine OR-Schaltung 16 und ein Flip-Flop 17 der Kommutierungszustand an den Eingang zur Rampenerzeugung zugeführt wird. Daneben sind ein Drehzahlermittler 18 und ein Drehrichtungsermittler 19 vorgesehen. Wie zu erkennen verwendet der Drehrichtungsermittler 19 die Größe des zeitlichen Verlaufs der Spannung und erhält diese vom Steigungsermittler 20.

In der Figur 4 ist der zeitliche Verlauf der Polradspannung bei einer positiven und einer negativen Drehrichtung eines einsträngigen EC-Motors mit einem asymmetrischen Aufbau der Statorzähne gezeigt. Hierbei können bekannte asymmetrische Konzepte verwendet werden, bei denen z. B. der Luftspalt nicht konstant ist, sondern sich in Umfangsrichtung abhängig von der Zahnposition eines Wickelzahns ändert. Durch eine Auswertung der mittleren Steigung des Betrages der Polradspannung uₚ des Zweipunkt-Stromreglers kann unter Ausnutzung der Asymmetrie während einer Kommutierungsphase daher die Drehrichtung des EC-Motors ermittelt werden, da die mittlere Steigung des Betrages der Polradspannung abhängig von der Drehrichtung des Rotors ist. Bei einer positiven Steigung, d. h. einem Ansteigen der Polradspannung uₚ, wie in der linken Abbildung der Figur 4 gezeigt, kann auf eine positive Drehrichtung und bei einer negativen Steigung, d. h. einem Abfallen der Polradspannung uₚ, wie in der rechten Abbildung der Figur 4 gezeigt, kann auf die umgekehrte, nämlich negative Drehrichtung geschlossen werden. So kann auf einfache aber zuverlässige Weise die Drehrichtung ermittelt werden.

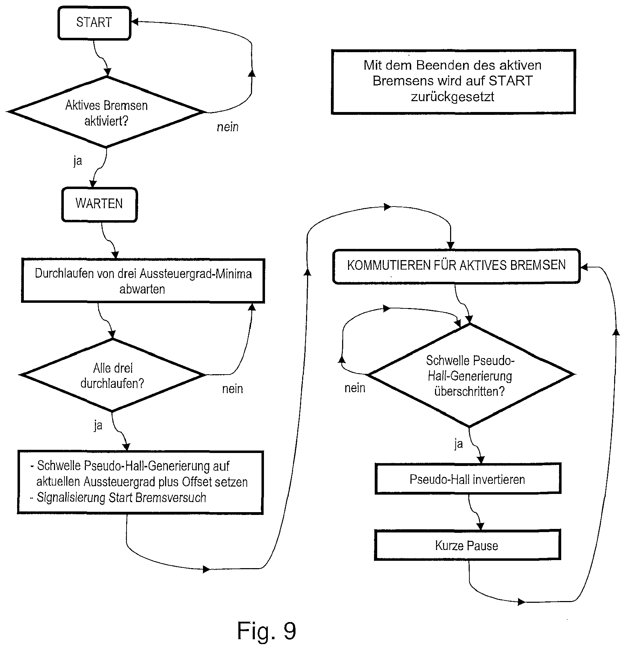

Da sich dieser Spannungsverlauf unmittelbar auch im Verlauf der Ausgangsspannung des Zweipunkt-Stromreglers, wie in der Figur 5 gezeigt, abbildet, lässt sich die Drehrichtung entsprechend aus der Änderung der Ausgangsspannung des Zweipunkt-Stromreglers ablesen. Eine im Mittel positive Steigung des Betrages |u_{w}| während einer Kommutierungsphase kann somit als positive Drehrichtung definiert werden, eine im Mittel negative Steigung des Betrages |u_{w}| umgekehrt als negative Drehrichtung gewertet werden. Somit kann bei angeforderter positiver Soll-Drehrichtung eine abweichende negative Ist-Drehrichtung erkannt und entsprechend steuerungstechnisch reagiert werden, z. B. mit Abbremsen und anschließendem Neuanlaufversuch, wie dies in dem Ablaufdiagramm der Figur 9 gezeigt ist.

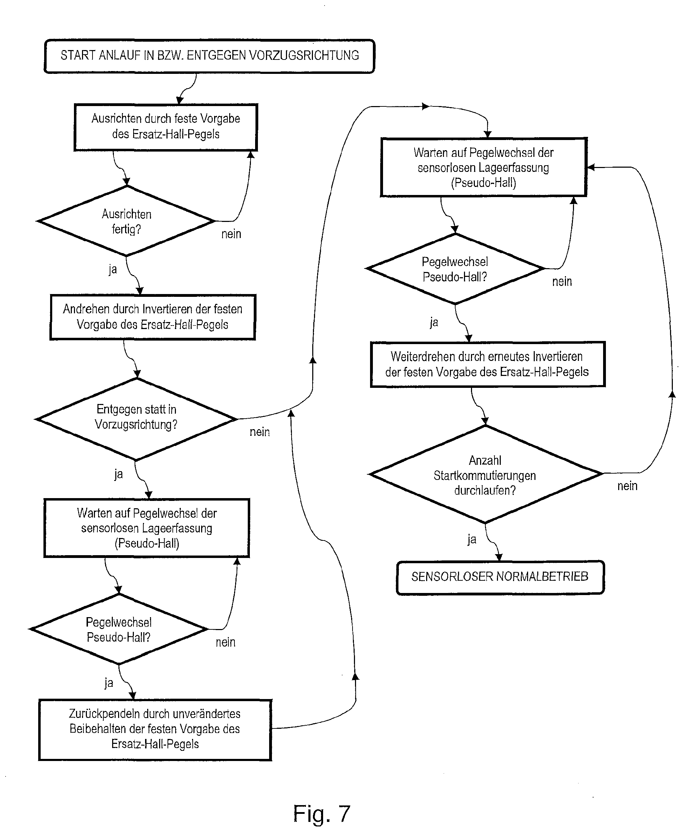

In der Figur 7 findet sich ein Ablaufdiagramm zur Erläuterung des Anlaufs eines einsträngigen EC-Motors in eine bestimmte Drehrichtung. Beim Motoranlauf wird zunächst der Rotor auf eine feste Startposition ausgerichtet und dann unmittelbar mit den ersten sensorlosen Kommutierungsschritten gestartet. Es erfolgt kein zeitlich gesteuertes Hochschleppen mit einer fest vorgegebenen Drehfeldrampe. Das Schema der ersten Kommutierungsschritte unterscheidet sich dabei geringfügig in Abhängigkeit der gewünschten Drehrichtung. Nach dem Ausrichten des Rotors folgt die erste erzwungene Kommutierung durch Invertieren eines Pseudo-Hall-Signals (ein Ersatz-Hall-Signal auf dessen Basis kommutiert wird), womit der Rotor in Bewegung versetzt wird (Motorstart). Mit der für den Anlauf (gegenüber Normalbetrieb) optimierten Parametrierung der sensorlosen Lageerfassung (durch Auswertung des resultierenden PWM-Aussteuergrad der Stromregelung) wird bereits der erste folgende Polwechsel erkannt. Beim Anlauf in Vorzugsdrehrichtung wird mit diesem ersten erkannten Kommutierungszeitpunkt durch Wechseln des Pseudo-Hall-Pegels das nächste Bestromungsschema aktiviert, worauf der Rotor seine Drehbewegung weiter fortsetzt. Nach einer festgelegten Anzahl solcher auf Anlauf optimierter Kommutierungen wird schließlich die Parametrierung der Rotorlageerfassung auf Werte für einen Normalbetrieb geändert und damit in den sensorlosen Normalbetrieb gewechselt. Beim Anlauf entgegen der Vorzugsdrehrichtung wird mit dem ersten erkannten Kommutierungszeitpunkt bewusst nicht kommutiert, sondern stattdessen das aktuelle Bestromungsschema weiter beibehalten. Damit stellt sich mit dem weiter drehenden Rotor nach und nach ein stärker werdendes, in entgegengesetzte Richtung wirkendes, Drehmoment ein, das den Rotor abbremst und schließlich in die entgegengesetzte Richtung in Bewegung setzt. Es zeigt sich ein aus dem Stillstand loslaufender Rotor, der nach dem ersten zwangsläufigen Loslaufen in Vorzugsrichtung durch eine Pendelbewegung in die entgegengesetzte Richtung weiter läuft.

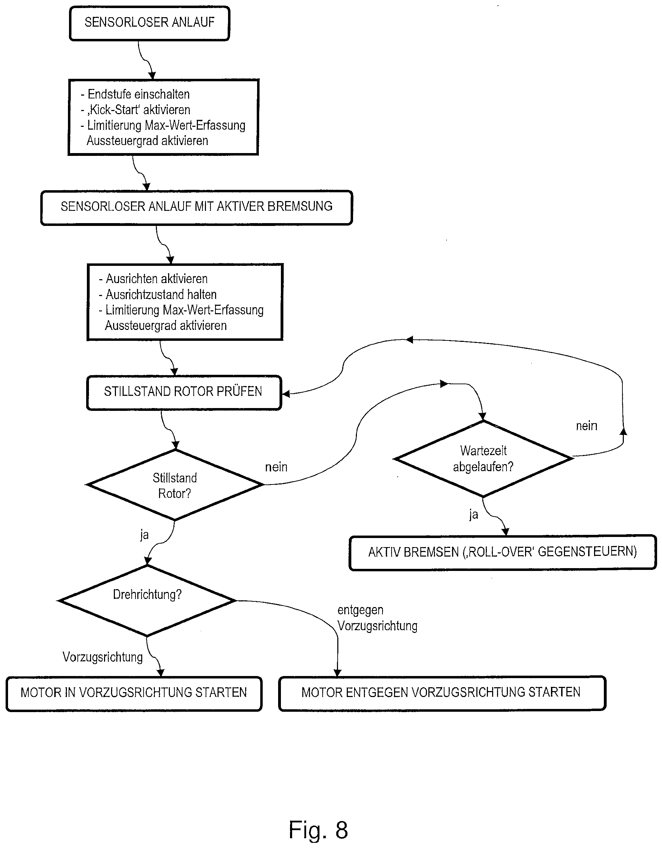

In der Figur 8 findet sich ein Ablaufdiagramm zur Erläuterung der Vorbereitung eines sensorlosen Anlaufs, der am Ende in den Normalbetrieb überführt wird.

In der Figur 9 findet sich ein Ablaufdiagramm zur Erläuterung des aktiven Bremsens des EC-Motors. Das Ablaufdiagramm umfasst die folgende Teilfunktionen: Setzen der für Abbremsen optimierten Einstellungen der sensorlosen Lageerfassung und Generierung eines Ersatz-Hall-Signal zur Kommutierung für aktives Bremsen.

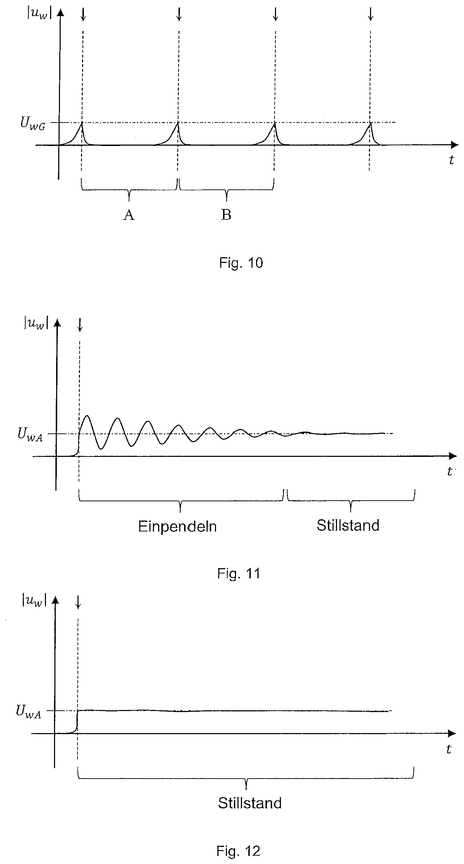

Die Figur 10 zeigt einen Funktionsgraphen, der den Betrag der mittleren Ausgangsspannung u_{w}(t) und den zugehörigen Spannungsgrenzwert für die Kommutierung bei aktiver Bremsung darstellt. Da bei aktiver Bremsung die angelegte mittlere Spannung gegenphasig zur Polarität der in der Motorwicklung induzierten Polradspannung verläuft, wird der vom Stromregler in die Wicklung eingeprägte Strom bereits bei einer vergleichsweise sehr geringen mittleren Spannung erreicht. Sobald sich ein Wechsel der Polarität der im Motor induzierten Spannung einstellt, beginnt die mittlere Ausgangsspannung des Stromreglers zu steigen. Dieser Anstieg über den Grenzwert U_{wG} wird zur Kommutierung genutzt.

Die Figuren 11 und 12 zeigen je einen Funktionsgraphen, der den Betrag der mittleren Ausgangsspannung u_{w}(t) beim Ausrichten des Rotors mit vom Stromregler konstant vorgegebenem Wicklungsstrom darstellt. Das Ausrichten des Rotors und dessen annähernder Stillstand sind grundsätzlich Voraussetzung für den darauf folgenden sensorlosen Motorstart (Kick-Start). In Figur 11 ist der Verlauf der mittleren Ausgangsspannung u_{w}(t) bei einem zuvor nicht in Ausricht-Ruhelage befindlichen Rotor dargestellt, in dessen Verlauf sich die einpendelnde Bewegung des Rotors abbildet. Durch Auswertung der Amplitude des dem Ruhepegel von u_{w}(t) (als U_{wA} gekennzeichnet) überlagerten Wechselanteils kann auf die Auslenkung der einpendelnden Rotorbewegung von dessen Stillstandslage geschlossen werden und somit der ideale früheste Zeitpunkt für den Übergang von Ausrichten des Rotors zum Motorstart (Kick-Start) gefunden werden. Ferner kann aus der momentanen Polarität dieses überlagerten Wechselanteils auf die momentane Richtung der Pendelbewegung geschlossen werden und somit in günstiger Ausführung genau dann der Motorstart (Kick-Start) ausgelöst werden, wenn die momentane Richtung der Pendelbewegung mit der Richtung des durchzuführenden Motorstarts übereinstimmt. Somit kann vorteilhafterweise bereits vor dem vollständigen Stillstand des einpendelnden Rotors der Motorstart im Fluß der Pendelbewegung erfolgen und somit die für das Ausrichten erforderliche Zeit weiter verkürzt werden (Anlaufverzögerung minimiert). In Figur 12 ist dagegen der Verlauf der mittleren Ausgangsspannung u_{w}(t) bei einem zuvor bereits auf Ausricht-Ruhelage befindlichen Rotor dargestellt, bei dem keine weitere Zeit für Ausrichten des Rotors verwendet werden muß und somit der Motorstart (Kick-Start) unmittelbar folgen kann. Mit dieser Auswertung der mittleren Ausgangsspannung u_{w}(t) kann somit, auch unabhängig von unterschiedlichen Trägheitsmomenten unterschiedlicher Rotoraufbauten, immer der frühest mögliche Zeitpunkt für den Übergang vom Ausrichten des Rotors zum Motoranlauf gefunden und damit die Anlaufverzögerung minimiert werden.

## Patentansprüche

1. Einsträngiger EC-Motor (13) mit einem Wicklungsstrang mit zwei Wicklungsanschlüssen umfassend einen Stromregler (11) im Wicklungsstrang zwischen den Wicklungsanschlüssen, wobei der Stromregler (11) ausgelegt ist, den Wicklungsstrom des einsträngigen EC-Motors (13) während einer ersten Kommutierungsphase (A) mit einem positiven Stromfluss und einer zweiten Kommutierungsphase (B) mit einem negativen Stromfluss jeweils auf einen konstanten Betrag zu regeln, wobei zur Ermittlung des Kommutierungszeitpunktes ein Betrag der mittleren Ausgangsspannung u_{w}(t) des Stromreglers (11), welche zwischen den beiden Wicklungsanschlüssen des EC-Motors (13) anliegt, verwendet wird, **dadurch gekennzeichnet, dass** der Stromregler (11) zur Ermittlung des jeweiligen Kommutierungszeitpunktes durch einen Vergleich der mittleren Ausgangsspannung u_{w}(t) des Stromreglers (11) mit einem vorgegebenen Spannungsgrenzwert u_{WG} ausgebildet ist und der Spannungsgrenzwert u_{WG} proportional zur Amplitude des jeweils konstanten Stroms bei den Kommutierungsphasen (A, B) ist.

2. Kommutierungsverfahren eines einsträngigen EC-Motors (13) mit einem Wicklungsstrang mit zwei Wicklungsanschlüssen gemäß Anspruch 1, wobei eine Stromregelung mittels eines Stromreglers (11) im Wicklungsstrang derart erfolgt, dass während einer ersten Kommutierungsphase (A) der Wicklungsstrang mit einem im Wesentlichen konstanten positiven Stromfluss und während einer zweiten darauf folgenden Kommutierungsphase (B) der Wicklungsstrang mit einem im Wesentlichen konstanten negativen Stromfluss bestromt wird, wobei zur Ermittlung des jeweiligen Kommutierungszeitpunktes ein Betrag der mittleren Ausgangsspannung u_{w}(t) des Stromreglers (11), welche zwischen den beiden Wicklungsanschlüssen des EC-Motors (13) anliegt, verwendet wird, **dadurch gekennzeichnet, dass** die Ermittlung des jeweiligen Kommutierungszeitpunktes durch einen Vergleich der mittleren Ausgangsspannung u_{w}(t) des Stromreglers (11) mit einem vorgegebenen Spannungsgrenzwert u_{WG} erfolgt und der Zeitpunkt an dem der Spannungsgrenzwert u_{WG} unterschritten wird, als Kommutierungszeitpunkt bestimmt wird zu dem ein Wechsel der Kommutierungsphasen (A, B) stattfindet und der Spannungsgrenzwert u_{WG} proportional zur Amplitude des jeweils konstanten Stroms bei den Kommutierungsphasen (A, B) gewählt wird.

3. Kommutierungsverfahren nach Anspruch 2, **dadurch gekennzeichnet, dass** der Kommutierungszeitpunkt zu dem ein Wechsel von der ersten Kommutierungsphase (A) zur zweiten Kommutierungsphase (B) erfolgt, der Zeitpunkt ist, der einem Nulldurchgang der Polradspannung des EC-Motors (13) entspricht.

4. Kommutierungsverfahren nach einem der Ansprüche 2 oder 3, **dadurch gekennzeichnet, dass** zum Erzielen eines bestimmten Vorkommutierungswinkels der Kommutierungszeitpunkt durch ein Anpassen des Spannungsgrenzwertes u_{WG} verändert wird.

5. Kommutierungsverfahren nach einem der Ansprüche 2 bis 4, **dadurch gekennzeichnet, dass** die Umkehrung des Stromflusses beim Wechsel der Kommutierungsphasen (A, B) zum Kommutierungszeitpunkt nicht sprunghaft, sondern gemäß einer definierten Änderungsrate erfolgt, indem durch eine Rampenfunktion am Eingang des Stromreglers (11) hierzu angelegt ist.

6. Kommutierungsverfahren nach einem der vorherigen Ansprüche 2 bis 5,
**dadurch gekennzeichnet, dass** zunächst der Anlauf des EC-Motors (13) aus dem Stillstand durch ein gezieltes Auslösen des Wechsels zwischen der ersten und zweiten Kommutierungsphase (A, B) dadurch erzielt wird, dass nach Ablauf einer vorgegebenen Zeit ein Wechsel von der jeweils ersten zur jeweils zweiten Kommutierungsphase (A, B) erfolgt, um dadurch den Rotor in eine Drehbewegung zu bringen.

7. Kommutierungsverfahren nach einem der vorherigen Ansprüche 2 bis 6,
**dadurch gekennzeichnet, dass** mittels einer Auswertung der mittleren Steigung oder des zeitlichen Differentials des Betrages der Ausgangsspannung u_{w}(t) des Stromreglers (11) während einer Kommutierungsphase (A, B) die Drehrichtung des EC-Motors (13) ermittelt wird und insbesondere eine im Mittel positive Steigung oder positives Vorzeichen des Differentials des Betrages während einer Kommutierungsphase (A, B) als positive Drehrichtung definiert wird und insbesondere eine im Mittel negative Steigung oder negatives Vorzeichen des Differentials des Betrages während einer Kommutierungsphase als negative Drehrichtung definiert wird.

8. Kommutierungsverfahren nach einem der vorherigen Ansprüche 2 bis 7,
**dadurch gekennzeichnet, dass** zum Bestimmen des Kommutierungszeitpunktes der PWM-Aussteuergrad einer Ansteuerung mittels Pulsweitenmodulation (PWM), anstatt der Auswertung der mittleren Ausgangsspannung u_{w}(t) des Stromreglers (11) erfolgt.

9. Kommutierungsverfahren nach einem der vorherigen Ansprüche 2 bis 8,
**dadurch gekennzeichnet, dass** die Dauer des Ausrichtens des Rotors durch Auswertung des zeitlichen Verlaufs der mittleren Ausgangsspannung u_{w}(t) des Stromreglers (11) verkürzt wird, insbesondere durch Auswertung der Abbildung der Pendelbewegung des Rotors in einer der mittleren Ausgangsspannung u_{w}(t) überlagerten Schwingung.

10. Kommutierungsverfahren nach Anspruch 9,
**dadurch gekennzeichnet, dass** aus der der mittleren Ausgangsspannung u_{w}(t) des Stromreglers (11) überlagerten, die Pendelbewegung des Rotors abbildenden, Wechselspannung auf die Richtung der momentanen Rotorpendelbewegung geschlossen werden kann und damit der Motoranlauf bereits vor vollständigem Einpendeln des auszurichtenden Rotors synchron zur Pendelbewegung des Rotors erfolgen kann.

11. Kommutierungsverfahren nach einem der vorherigen Ansprüche 2 bis 10,
**dadurch gekennzeichnet, dass** ein vor dem Motoranlauf abzubremsender Rotor durch aktive Bremsung zum Stillstand gebracht wird, derart, dass durch Auswertung der mittleren Ausgangsspannung u_{w}(t) eines den Motorstrom stellenden Stromreglers (11) mit Überschreiten eines Grenzwerts kommutiert wird.

## Claims

1. A single-stranded EC motor (13) with a winding strand with two winding terminals, comprising a current regulator (11) in the winding strand between the winding terminals, wherein the current regulator (11) is adapted to respectively regulate the winding current of the single-stranded EC motor (13) to a constant amount with a positive current flow during a first commutation phase (A) and with a negative current flow during a second commutation phase (B), wherein an amount of the mean output voltage u_{w}(t) of the current regulator (11), which is applied between the two winding terminals of the EC motor (13), is used for determining the commutation time, **characterized in that** the current regulator (11) is formed to determine the respective commutation time by comparing the mean output voltage u_{w}(t) of the current regulator (11) with a predetermined voltage limit value u_{WG} and the voltage limit value u_{WG} is proportional to the amplitude of the respective constant current at the commutation phases (A, B).

2. A commutation method of a single-stranded EC motor (13) with a winding strand with two winding terminals according to claim 1, wherein a current control by means of a current regulator (11) in the winding strand is such that, during a first commutation phase (A), current is supplied to the winding strand with a substantially constant positive current flow and during a following second commutation phase (B), current is supplied to the winding strand with a substantially constant negative current flow, wherein an amount of the mean output voltage u_{w}(t) of the current regulator (11), which is applied between the two winding terminals of the EC motor (13), is used for determining the respective commutation time, **characterized in that** the respective commutation time is determined by comparing the mean output voltage u_{w}(t) of the current regulator (11) with a predetermined voltage limit value u_{WG} and the time at which the voltage limit value u_{WG} is not reached is determined as the commutation time at which a change of the commutation phases (A, B) takes place and the voltage limit value u_{WG} is selected proportionally to the amplitude of the respective constant current at the commutation phases (A, B).

3. The commutation method according to claim 2, **characterized in that** the commutation time at which a change from the first commutation phase (A) to the second commutation time (B) takes place is the time which corresponds to a zero crossing of the pole wheel voltage of the EC motor (13).

4. The commutation method according to any one of claims 2 or 3, **characterized in that**, in order to achieve a specific pre-commutation angle, the commutation time is changed by adapting the voltage limit value u_{WG}.

5. The commutation method according to any one of claims 2 to 4, **characterized in that** the reversal of the current flow during change of the commutation phases (A, B) at the commutation time is not abruptly but according to a defined rate of change by applying a ramp function at the inlet of the current regulator (11).

6. The commutation method according to any one of the preceding claims 2 to 5, **characterized in that** first, the start-up of the EC motor (13) from standstill by an intentional triggering of the change between the first and the second commutation phase (A, B) is achieved by a change from the respective first to the respective second commutation phase (A, B) after a predetermined time has elapsed in order to thus set the rotor in a rotational movement.

7. The commutation method according to any one of the preceding claims 2 to 6, **characterized in that** the rotational direction of the EC motor (13) is determined by means of an evaluation of the mean slope or the temporal difference of the amount of the output voltage u_{w}(t) of the current regulator (11) during a commutation phase (A, B) and in particular, an on average positive slope or a positive sign of the difference of the amount during a commutation phase (A, B) is defined as a positive rotational direction and in particular, an on average negative slope or a negative sign of the difference of the amount during a commutation phase is defined as a negative rotational direction.

8. The commutation method according to any one of the preceding claims 2 to 7, **characterized in that** the PWM degree of control of a control is by means of pulse width modulation (PWM) instead of the evaluation of the mean output voltage u_{w}(t) of the current regulator (11) in order to determine the commutation time.

9. The commutation method according to any one of the preceding claims 2 to 8, **characterized in that** the duration of the alignment of the rotor is shortened by evaluating the temporal course of the mean output voltage u_{w}(t) of the current regulator (11), in particular by evaluating the illustration of the oscillating movement of the rotor in an oscillation overlying the mean output voltage u_{w}(t).

10. The commutation method according to claim 9, **characterized in that** the direction of the current oscillating rotor movement can be inferred from the AC voltage overlying the mean output voltage u_{w}(t) of the current regulator (11) and illustrating the oscillating movement of the rotor and thus the motor start-up can already be before the complete stabilization of the rotor to be aligned synchronous to the oscillating movement of the rotor.

11. The commutation method according to any one of the preceding claims 2 to 10, **characterized in that** a rotor to be slowed down before the motor start-up is brought to standstill through active braking such that by evaluating the mean output voltage u_{w}(t) of a current regulator (11) providing the motor current, commutation exceeding a limit value takes place.

## Revendications

1. Moteur EC monobrin (13) avec une phase d'enroulement avec deux connexions d'enroulement, comprenant un régulateur de courant (11) dans la phase d'enroulement entre les connexions d'enroulement, dans lequel le régulateur de courant (11) est conçu pour réguler le courant d'enroulement du moteur EC monobrin (13) à une valeur constante pendant une première phase de commutation (A) avec un flux de courant positif et une seconde phase de commutation (B) avec un flux de courant négatif, dans lequel une valeur de la tension de sortie moyenne u_{w}(t) du régulateur de courant (11), présente entre les deux connexions d'enroulement du moteur EC (13), est utilisée pour déterminer le moment de commutation, **caractérisé en ce que** le régulateur de courant (11) est conçu pour déterminer le moment de commutation respectif par une comparaison de la tension de sortie moyenne u_{w}(t) du régulateur de courant (11) avec une valeur limite de tension prédéterminée U_{WG} et la valeur limite de tension U_{WG} est proportionnelle à l'amplitude du courant constant respectif dans les phases de commutation (A, B).

2. Procédé de commutation d'un moteur EC monobrin (13) avec une phase d'enroulement avec deux liaisons d'enroulement selon la revendication 1, dans lequel la régulation du courant est effectuée au moyen d'un régulateur de courant (11) dans la phase d'enroulement de sorte que, pendant une première phase de commutation (A), la phase d'enroulement est alimentée par un flux de courant positif sensiblement constant, et pendant une seconde phase de commutation suivante (B), la phase d'enroulement est alimentée par un flux de courant négatif sensiblement constant, dans lequel une valeur de la tension de sortie moyenne u_{w}(t) du régulateur de courant (11), présente entre les deux connexions d'enroulement du moteur EC (13), est utilisée pour déterminer le moment de commutation respectif, **caractérisé en ce que** la détermination du moment de commutation respectif a lieu par une comparaison de la tension de sortie moyenne u_{w}(t) du régulateur de courant (11) avec une valeur limite de tension prédéterminée U_{WG} et le moment auquel la valeur limite de tension U_{WG} est dépassée par le bas, est déterminé comme le moment de commutation auquel un changement de phases de commutation (A, B) a lieu et la valeur limite de tension U_{WG} est sélectionnée proportionnellement à l'amplitude du courant constant dans les phases de commutation (A, B).

3. Procédé de commutation selon la revendication 2, **caractérisé en ce que** le moment de commutation auquel a lieu un passage de la première phase de commutation (A) à la seconde phase de commutation (B) est le temps qui correspond à un passage par zéro de la tension de la roue polaire du moteur EC (13).

4. Procédé de commutation selon l'une des revendications 2 ou 3, **caractérisé en ce que**, pour obtenir un angle de pré-commutation spécifique, le moment de commutation est modifié par un ajustement de la valeur limite de tension U_{WG}.

5. Procédé de commutation selon l'une des revendications 2 à 4, **caractérisé en ce que** l'inversion du flux de courant lors du changement des phases de commutation (A, B) au moment de la commutation ne se produit pas brusquement, mais plutôt selon une vitesse de changement définie, en appliquant à cet effet par une fonction de rampe à l'entrée du régulateur de courant (11).

6. Procédé de commutation selon l'une des revendications précédentes 2 à 5,
**caractérisé en ce que** le moteur EC (13) est initialement démarré à partir de l'arrêt par un déclenchement spécifique du changement entre la première et la seconde phase de commutation (A, B) de sorte que, après l'écoulement d'un temps prédéterminé, un changement intervient de la première à la seconde phase de commutation (A, B) pour mettre le rotor dans un mouvement de rotation.

7. Procédé de commutation selon l'une des revendications précédentes 2 à 6,
**caractérisé en ce que** le sens de rotation du moteur EC (13) est déterminé par une évaluation de la pente moyenne ou du différentiel temporel de la valeur de la tension de sortie u_{w}(t) du régulateur de courant (11) pendant une phase de commutation (A, B), et en particulier, une pente positive moyenne ou un signe positif du différentiel de la valeur lors d'une phase de commutation (A, B) est définie comme un sens de rotation positif, et en particulier, une pente négative moyenne ou un signe négatif du différentiel de la valeur lors d'une phase de commutation est définie comme un sens de rotation négatif.

8. Procédé de commutation selon l'une des revendications précédentes 2 à 7,
**caractérisé en ce que**, pour déterminer le moment de commutation, le niveau de commande PWM d'une commande est effectué à l'aide d'une modulation de largeur d'impulsion (PWM), au lieu d'évaluer la tension de sortie moyenne u_{w}(t) du régulateur de courant (11).

9. Procédé de commutation selon l'une des revendications précédentes 2 à 8,
**caractérisé en ce que** la durée d'alignement du rotor est raccourcie par l'évaluation de l'évolution temporelle de la tension de sortie moyenne u_{w}(t) du régulateur de courant (11), en particulier par l'évaluation de l'image du mouvement pendulaire du rotor dans une oscillation superposée sur la tension de sortie moyenne Uw(t).

10. Procédé de commutation selon la revendication 9,
**caractérisé en ce que**, à partir de la tension alternative superposée à la tension de sortie moyenne u_{w}(t) du régulateur de courant (11) et représentant le mouvement pendulaire du rotor, on peut déduire la direction du mouvement pendulaire actuel du rotor et ainsi le moteur peut être démarré de manière synchrone avec le mouvement pendulaire du rotor avant que le rotor à aligner ne soit complètement stabilisé.

11. Procédé de commutation selon l'une des revendications précédentes 2 à 10,
**caractérisé en ce qu'**un rotor à freiner avant le démarrage du moteur est arrêté par freinage actif, de sorte qu'une commutation intervient par l'évaluation de la tension de sortie moyenne u_{w}(t) d'un régulateur de courant (11) réglant le courant du moteur avec dépassement d'une valeur limite.
